# EUROPEAN PATENT SPECIFICATION

(11) **EP 4 416 710 B1**
(45) Date of publication and mention of the grant of the patent: **12.03.2025**
(21) Application number: 22801888.3
(22) Date of filing: 14.10.2022
(51) Int. Cl.: G07F 13/10, G07F 11/68, G07F 11/70, G07F 11/24, A47J 43/27, A47J 31/40, B26D 1/08, B26D 5/14, B26D 5/16, B26D 5/20, B26D 5/22, B26D 5/38, B65H 35/06

(54) **STIR STICK FORMING ASSEMBLY FOR A STIR STICK DISPENSER IN A BEVERAGE VENDING MACHINE**
RÜHRSTABFORMANORDNUNG FÜR EINEN RÜHRSTABSPENDER IN EINEM GETRÄNKEVERKAUFSAUTOMAT
ENSEMBLE DE FORMATION DE BÂTONS MÉLANGEURS POUR DISTRIBUTEUR DE BÂTONS MÉLANGEURS DANS UN DISTRIBUTEUR AUTOMATIQUE DE BOISSONS

(30) Priority: 15.10.2021 IT 202100026507
(43) Date of publication of application: 21.08.2024
(73) Proprietor: EVOCA S.p.A., 24030 Valbrembo (BG) (IT)
(72) Inventor: SIRBU VILLA, Dan Alexie, 24030 VALBREMBO (BG) (IT)
(74) Representative: Studio Torta S.p.A.
(86) International application number: PCT/IB2022/059868
(87) International publication number: WO 2023/062598

(56) References cited:
- EP-A1- 0 111 598
- WO-A1-2020/225669
- US-A- 3 174 374
- US-A- 5 671 065

## Description

### CROSS-REFERENCE TO RELATED APPLICATIONS

This patent application claims priority to Italian patent application no. 102021000026507 filed on 15.10.2021.

### TECHNICAL FIELD OF THE INVENTION

The present invention relates to a stir stick forming assembly for a stir stick dispenser in a beverage vending machine, to which the following description will refer without thereby losing generality.

### STATE OF THE ART

In the vending industry, it is known to have a stir stick dispenser inside the beverage vending machines and which is controlled by an electronic control unit of the beverage vending machine to dispense stir sticks directly inside the beverage cups.

The stir sticks are normally released in the cups before the cups are filled with the beverage and dispensing may be responsive to users' requests for sugar to be added in the selected beverages.

Various types of stir sticks are used nowadays in the beverage vending machines. A moderate amount of use is still reserved for plastic stir sticks, which, however, is gradually losing interest due to the known problems of environmental pollution.

Instead of the traditional plastic stir sticks, biodegradable paper stir sticks are finding increasing use. An example of paper stir sticks is described in WO 2020/225669 A1 in the name of the present Applicant. In WO 2020/225669 A1, the paper stir sticks are produced from a paper tape arranged in a fixed unwinding station; the tape unwound from the reel by a feeding assembly is firstly supplied through a shaping assembly and then through a cutting assembly that cuts it transversally to size to form stir sticks with predefined lengths which vary according to the height of the cups, inside which the beverage is dispensed.

Although formation of stir sticks from tape reels allows stable stir sticks with variable lengths to be rapidly produced by controlling the feeding of the tape and the cutting assembly, this production mode is found to be not completely satisfactory due to the fact that the known feeding and cutting assemblies are found to be relatively bulky and expensive and, for these reasons, they fail to allow the increasingly felt need to produce extremely compact and cost-effective stick dispensers to be met.

The known feeding and cutting assemblies are driven by independent actuators that are difficult to synchronize and to maintain synchronized over time. As a result, even after relatively short periods of time, the dispensed stir sticks present degrees of finishing and, in some cases, even dimensions or geometries that differ from those intended by the design. In other words, even small synchronization errors between the feeding and cutting assemblies generate undesired burrs or tears on the stir sticks especially on opposite end portions thereof.

Then, in some cases, lack of synchronization or inaccurate feeding of the tape are the reasons for jamming of the forming assembly and the resulting unavoidable machine downtimes.

### OBJECT AND SUMMARY OF THE INVENTION

The aim of the present invention is to produce a stir stick forming assembly for a stir stick dispenser in a beverage vending machine, which allows the above problems to be simply and economically overcome.

A particular aim of the present invention is to produce a stir stick forming assembly which is extremely compact, easy to control, and cost-effective.

A further aim of the present invention is to produce a stir stick forming assembly with a high and constant efficiency and reliability, thus being able to produce stir sticks always having the intended geometry and intended length and a constant product quality.

According to the present invention a stir stick forming assembly is provided, in particular for a stir stick dispenser of a beverage vending machine; the forming assembly comprising a frame for attachment to a fixed body; an inlet passage for a tape material, an outlet opening for stir sticks, a feeding member for feeding the tape material towards said outlet opening, first motorized means for moving said feeding member, a cutting member for transversally cutting the tape material, and second motorized means for moving said cutting member; characterized in that said first and second motorized means comprise a single common electric motor; command and control means to command and control said single electric motor are provided and configured to rotate said single electric motor in one direction for driving said feeding member and in the opposite direction for driving said cutting member.

Preferably, in the above-defined assembly, the first motorized means and the second motorized means are arranged symmetrically and on opposite sides of a vertical laying plane where an axis of a rotating shaft of the single electric motor lays.

### BRIEF DESCRIPTION OF THE DRAWINGS

Figure 1 is a front perspective view of a stir stick dispenser provided with a preferred embodiment of a stir stick forming assembly according to the present invention.
Figures 2A, 2B and 2C are three different perspective views, on an enlarged scale and with parts removed for clarity, of the stir stick forming assembly of Figure 1.
Figure 3 is a front elevation view of the forming assembly of Figure 2B.
Figure 4 is a section view along line IV-IV of Figure 3.
Figures 5 and 6 are side views, with parts removed for clarity, of the forming assembly of Figure 2B arranged in two different operating positions.
Figure 7 is an exploded perspective view, with parts removed for clarity, of a detail of the forming assembly of Figure 2B.
Figure 8 is an exploded perspective view, with parts removed for clarity, of a further detail of the forming assembly of Figure 2B.
Figure 9 is an exploded perspective view, on an enlarged scale, of a portion of the further detail of Figure 8.

### DETAILED DESCRIPTION OF PREFERRED EMBODIMENTS OF THE INVENTION

The invention will now be described in detail with reference to the attached Figures to allow an expert person to produce it and use it. Various modifications to the described embodiments will be immediately clear to the expert persons and the generic principles described may be applied to other embodiments and applications without thereby departing from the scope of the present invention as defined in the appended claims. Therefore, the present invention must not be considered as limited to the embodiments described and illustrated but should be awarded the broadest scope consistent with the principles and the characteristics described and claimed herein.

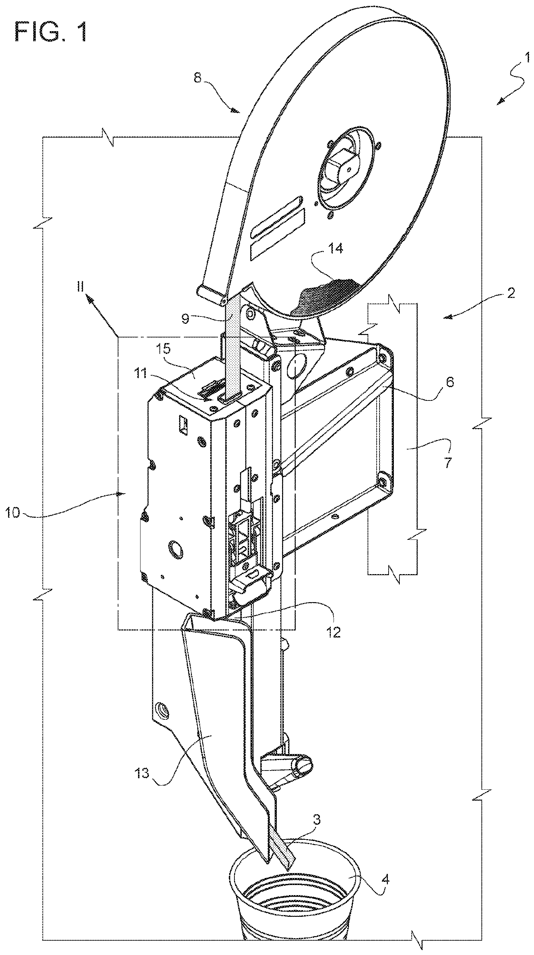

Figure 1 schematically and partially shows a beverage vending machine 1 comprising a stir stick dispenser 2 to dispense individual stir sticks 3 to stir beverages dispensed in cups 4.

In the example described, the stir stick dispenser 2 is housed in a box-shaped outer casing of the beverage vending machine 1.

Alternatively, the stir stick dispenser 2 may be arranged outside the outer casing or may be even distinct from the beverage vending machine 1 so as to form a stand-alone device operable by a user independently of the beverage vending machine 1 to dispense stir sticks 3 on demand.

In all cases, the stir stick dispenser 2 is configured to form and dispense stir sticks 3 in succession, which conveniently are disposable shaped stir sticks.

The stir stick dispenser 2 comprises a support structure 6 connected to a fixed support 7, a tape supply device 8 for supplying a tape 9 of food-grade ecological material, and a stir stick forming assembly 10 arranged below the tape supply device 8. The stir stick forming assembly 10 has an upper inlet passage 11 for the tape 9 and a lower outlet opening 12 for the stir sticks 3 and directed towards the cup 4 by a conveyor 13.

Conveniently, the tape 9 is wound to form a reel 14 housed in the tape supply device 8 and is preferably biodegradable or compostable and conveniently plastic-free, for example, waterproof cardboard.

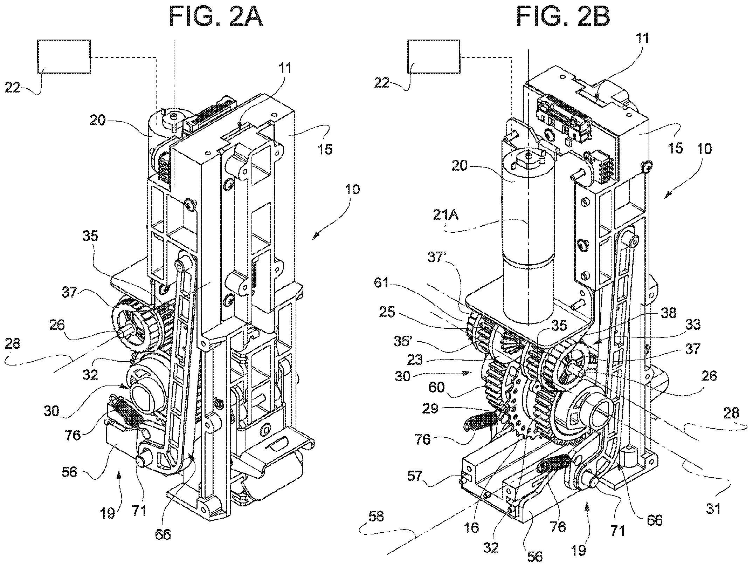

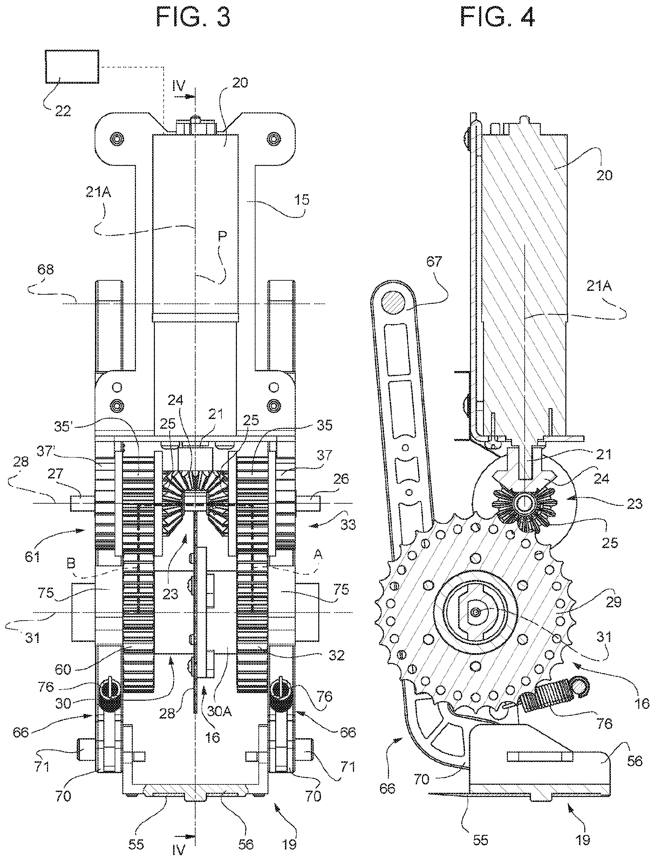

With reference to Figures 2A-2C and 3, the stir stick forming assembly 10 comprises a mounting frame 15 to allow the stir stick forming assembly 10 to be mounted to the support structure 6, a tape feeding assembly 16 to feed the tape 9, a tape shaping assembly 18 to shape the tape, and a tape cutting assembly 19 to transversally cut the tape 9 to form the stir sticks 3.

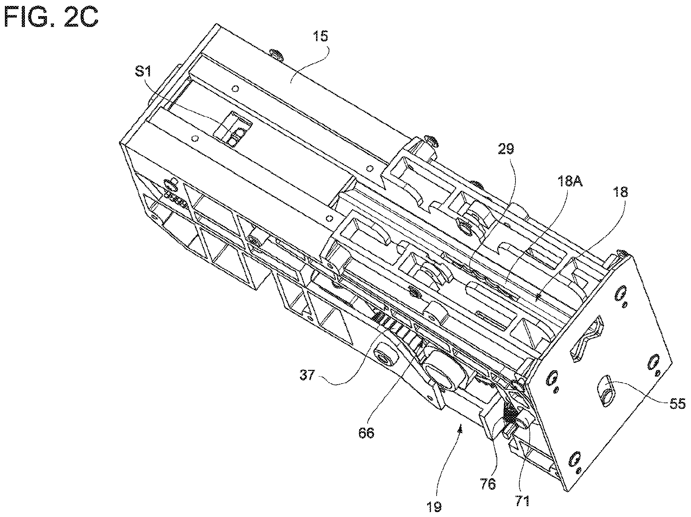

Preferably, the tape shaping assembly 18, known per se, is designed as a vertical tape deformation and guide V-shaped folder (Figure 2C) to V-shape deform the tape 9 in a known manner.

With reference to Figures 2, 3 and 4, in the stir stick forming assembly 10, the tape feeding assembly 16 and the tape cutting assembly 19 are driven by a single electric motor 20, which is carried by an upper portion of the mounting frame 15, has an output shaft 21 mounted to rotate about a vertical axis 21A, and is controlled by an electronic command and control unit 22 configured to cause the electric motor 20 to rotate in opposite directions.

With reference to Figures 2A, 2B and, in particular to Figure 3, the torque delivered by the motor 20 is directed to two distinct parallel branches A and B by a mechanical transmission 23. The mechanical transmission 23 comprises an inlet bevel pinion 24 fitted to the shaft 21 and two identical motion output bevel gears 25 arranged on opposite diametrical sides of the bevel pinion 24.

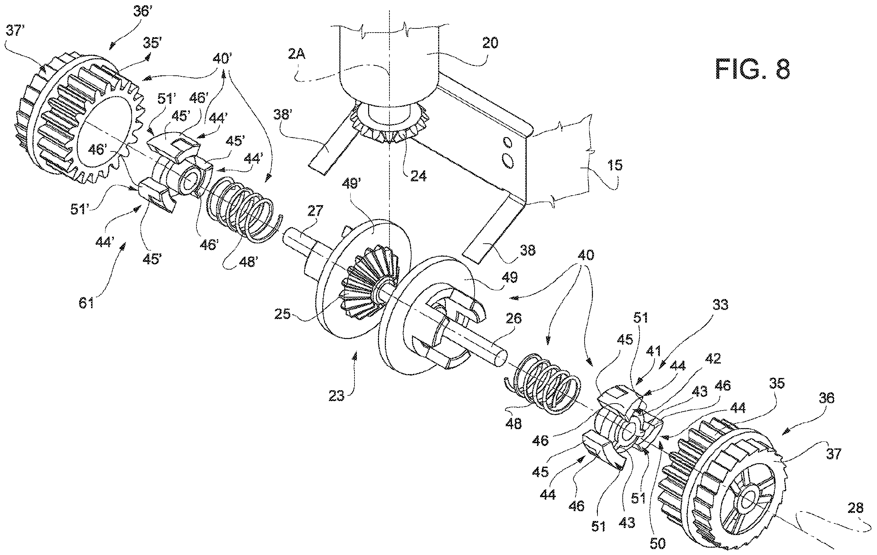

The bevel gears 25 each stably carry a disk or plate 49, are idly mounted to respective shafts 26 and 27 (Figures 3 and 8), which extend coaxially to a fixed common axis 28 orthogonal to the axis 21A, in opposite directions from the transmission 23, and form end segments of a one-piece single shaft coaxial to the axis 28. Due to being in one single piece, this shaft is axially removable.

The shafts 26 and 27 support part of the tape feeding assembly 16 and part of the tape cutting assembly 19, respectively.

In addition, the tape feeding assembly 16 comprises a tape guide 18A defined by an extension of the vertical tape deformation and guide V-shaped folder and a tape feeding wheel 29 (Figures 2C and 4), which is externally toothed and cooperates with the tape 9 through a slot formed in the cusp of the tape guide 18A (Figure 2C).

The feeding wheel 29 is idly mounted to an intermediate segment 30A of a shaft 30 rotatably coupled to the mounting frame 15 to rotate about a fixed hinge axis 31 parallel to and lowered with respect to the axis 28.

With reference to Figure 3, the tape feeding assembly 16 further comprises a gear wheel 32, which is mounted to the shaft 30 so as to be angularly idle and axially fixed, is fixed to the feeding wheel 29 and meshes with a one-way angular motion transmission assembly 33 surrounding the shaft 26.

Hereafter, one-way angular motion transmission assembly is meant to indicate any device capable of transmitting motion in one rotation direction and preventing the motion transmission in an opposite rotation direction.

In the specific case, with reference to Figure 3 and, in particular, to Figure 8, the one-way angular motion transmission assembly 33 is of a ratchet or a freewheel type, is configured to transmit rotational motion to the gear wheel 32 and to the feeding wheel 29 when the electric motor 20 rotates in one rotation direction and to prevent the transmission of the motion to the gear wheel 32 when the electric motor 20 rotates in the opposite rotation direction.

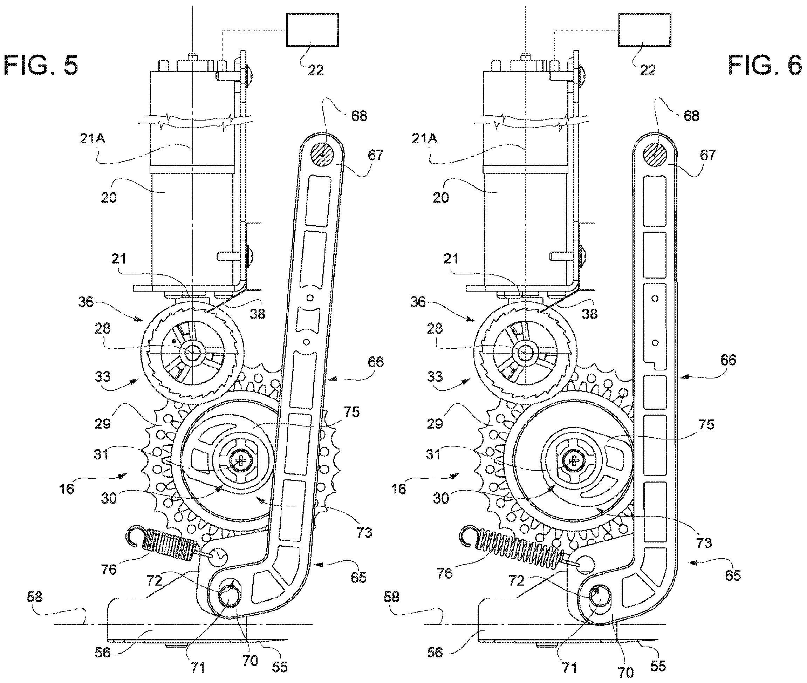

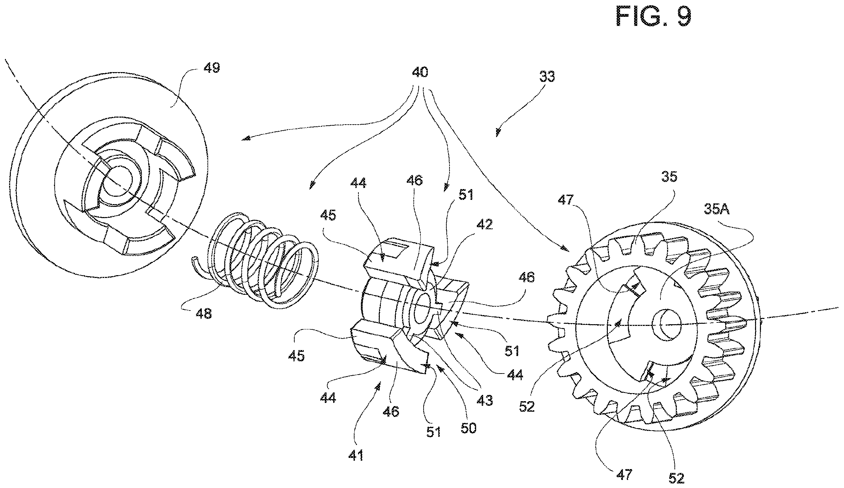

With reference to Figures 8 and 9, the one-way angular motion transmission assembly 33 comprises an externally toothed wheel 35 permanently meshing with the gear wheel 32 (Figure 3) and idly coupled to the shaft 26 and a ratchet or harpoon 36. Preferably, the ratchet or harpoon 36 comprises a gear wheel 37 with slanted toothing in contact with and stably connected to the gear wheel 35, and an elastic foil 38, which has one end stably connected to the mounting frame 15, cantilevers from the mounting frame 15 and has an opposite free end portion snap-fitted to the slanted toothing of the gear wheel 37 (Figures 5, 6 and 8). In this way, the ratchet or harpoon 36 allows the gear wheel 35 to freely rotate in one rotation direction and causes the gear wheel 35 to become angularly integral with the mounting frame 15 in the opposite rotation direction.

With reference to Figures 8 and 9, the one-way angular motion transmission assembly 33 further comprises a snap-fit compliant angular joint 40 between the plate 49 and the gear wheel 35.

The angular joint 40 comprises a transmission or engagement member 41 including a hub 42 mounted to rotate about the shaft 26 and to freely slide along the shaft 26, a plurality of radial arms 43 stably connected to the hub 42 and, for each arm 43, a respective retention tooth 44. Each retention tooth 44 extends in a direction parallel to the axis 28 and on opposite sides of the relevant arm 43 and comprises a tail portion 45 and a head portion 46, the tail portion 45 coupled to the plate 49 so as to be axially slidable and angularly fixed, so as to always be angularly integral with the plate 49 and with the corresponding bevel gear 25.

The head portion 46 of each tooth 44 is so shaped as to axially and disengageably insert into each of the seats 47 of a crown of angular retention seats formed in a core 35A of the gear wheel 35 coaxially to the axis 28. The head portions 46 are pushed to engage the seats 47 by a wire compression spring 48, which surrounds the shaft 26 and is elastically forced between the plate 49 carried by the bevel gear 25 and the hub 42.

The head portions 46 are moved to disengage the seats 47 by a cam assembly 50 comprising, for each portion 46, two shaped surfaces 51 and 52 inclined with respect to the axis 28, wherein the surfaces 51 frontally delimit the relevant head portions 46, while the surfaces 52 are mutually angularly equidistant around the axis 28 and axially delimit circular segments of the core 35A of the gear wheel 35 (Figures 8 and 9).

The curvatures or inclinations of the surfaces 51 and 52 are chosen so that, when the electric motor 20 is operated to rotate in one rotation direction, and in particular in the direction in which the ratchet 36 allows the gear wheel 35 to rotate, the teeth 44 remain in the seats 47 and cause the gear wheel 35 and the gear wheel 32 to rotate, whereas, when the motor 20 is operated to rotate in the opposite rotation direction and the ratchet 36 angularly blocks the gear wheel 35, the surfaces 51 and 52 slide on each other, thus exerting an axial thrust on the teeth 44 opposite to and greater than that exerted by the spring 48 on the hub 42. In this condition, the teeth 44 move back toward the plate 49 and gradually disengage the seats 47, thus allowing the gear wheel 35 to remain angularly stationary with respect to the mounting frame 15. In this way, the gear wheel 35 transmits the motion to the gear wheel 32 when the motor 20 is operated to rotate in one rotation direction, which results in a feeding of the tape 9 by an amount equal to the desired length of the stirs sticks 3. When the motor 20 is operated to rotate in the opposite rotation direction, the tape 9 remains stationary along the guide 18A in a tape cutting position.

The tape 9 is cut by the tape cutting assembly 19, which, with reference to Figures 3, 4 and 7, comprises a guillotine cutting blade 55 fixed to a carriage 56 coupled to a guide 57 fixed to the mounting frame 15 to slide in opposite directions along a cutting direction 58 orthogonal to the axes 21A, 28 and 31 and to the tape guide 18A.

The carriage 56 is part of the tape cutting assembly 19, which further comprises a gear wheel 60 identical to the gear wheel 32 and fixed to the shaft 30 on opposite sides of the gear wheel 29 with respect to the gear wheel 32 (Figure 3).

The tape cutting assembly 19 comprises a one-way angular motion transmission assembly 61 which is conceptually the same as and mirrors the one-way angular motion transmission assembly 33. Therefore, in the following, the parts of the one-way angular motion transmission assembly 61 will be referenced with the same reference numerals as the corresponding parts of the one-way angular motion transmission assembly 33 with the addition of a apex (').

As a result of the foregoing, the one-way angular motion transmission assembly 61 is capable of transmitting the rotational motion to the shaft 30 and rotating the gear wheel 60 when the electric motor 20 rotates in one rotation direction and preventing the motion transmission to the shaft 30 when the electric motor 20 rotates in the opposite rotation direction.

The one-way angular motion transmission assembly 61 surrounds the shaft 27, is coupled to the relevant bevel gear 25 in the same way that the assembly 33 is coupled to the other bevel wheel 25 and comprises a gear wheel 35' meshing with the gear wheel 60 (Figure 3).

With reference to Figures 2,5,6 and 7, the tape cutting assembly 19 comprises a cam driving device 65 to move the carriage 56 and the blade 55 with respect to the mounting frame 15 and tape guide 18A between a retracted rest position in which the tape 9 is allowed to be fed and a advanced position in which the tape 9 is allowed to be cut (Figure 5).

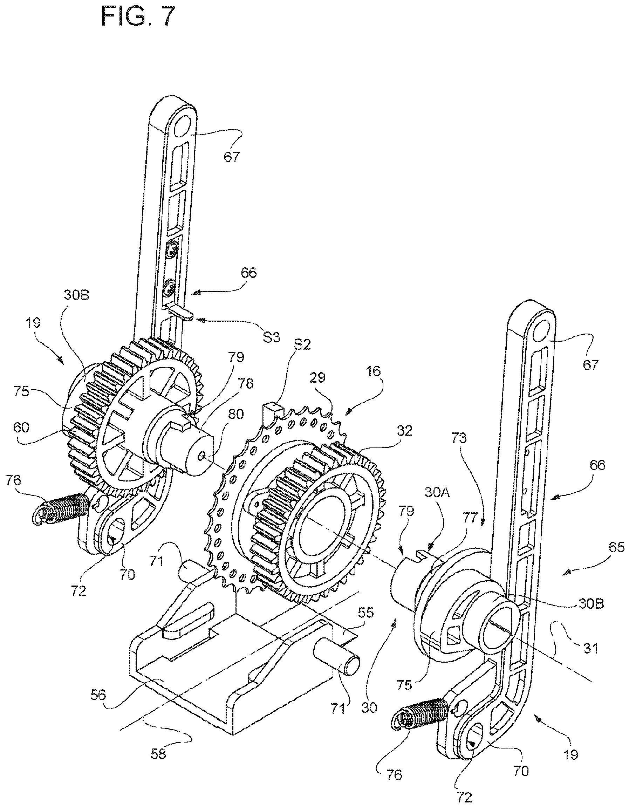

The cam driving device 65 comprises two L-shaped arms 66 arranged on opposite sides of the gear wheels 32 and 60 (Figures 3 and 7) and of the carriage 56.

Each arm 66 has an upper end portion 67 hinged to the mounting frame 15 above the axis 28 to rotate about a fixed hinge axis 68 parallel to the axes 28 and 31. Each arm 66 comprises a lower end 70 coupled to a respective side of the carriage 56 by a respective pin 71, which cantilevers from the carriage 56 parallel to the axis 68, is fixed to the carriage 56, and slidably engages a vertical eyelet 72 formed in the lower end 70 of the relevant arm 66.

The arms 66 swing in unison around the relevant pins 68 under the thrust of an eccentric cam 73 driven by the shaft 30 and forming part of the tape cutting assembly 19. The eccentric cam 73 comprises, for each arm 66, a radial lobe 75 eccentric with respect to the axis 31 and stably connected to a respective end portion 30B of the shaft 30. Each arm 66 comprises an intermediate portion kept in abutment against a respective radial lobe 75 by a traction spring 76 arranged between the lower end 70 of the relevant arm 66 and the mounting frame 15.

With reference to Figure 7, for simplicity of assembly, the shaft 30 is made in two parts referenced by 77 and 78, which are mutually connected by a front tooth joint 79 and are axially tightened against each other by a screw 80. The part 78, the gear wheel 60 and the relevant radial lobe 75 form part of a one-piece body, while the other part 77 carries the other radial lobe 75 and cooperates with the part 78 to support the gear wheel 32 and the wheel 29 so that they may rotate with respect to the shaft 30.

From the above, it may be appreciated that the mechanical transmission 23, the opposing support shafts 26, 27 and the mutually symmetrical one-way assemblies 33 and 61 allow only the tape feeding assembly 16 to be driven when the motor 20 rotates in one rotation direction and only the tape cutting assembly 19 to be driven when the motor 20 rotates in the opposite rotation direction, while keeping the other assembly stationary or waiting.

In particular, when the motor 20 is rotated in one rotation direction, the motion is transmitted from the bevel pinion 24 to both the bevel gears 25. Since the ratchets 36 and 36' are mutually symmetrical, one of the ratchets opposes the rotation of the relevant gear wheel 35, 35', while the other ratchet allows the relevant gear wheel 35, 35' to rotate and transmit the motion. Identical situation but reversed occurs when the motor 20 is rotated in a rotation direction opposite than the previous one.

The consequence is that for one rotation direction only the tape feeding assembly 16 is operated while the tape cutting assembly 19 remains in a waiting condition, during which the relevant joint 41,41' snaps repeatedly and prevents the motion transmission and the blade 55 remains in a retracted rest position, shown in Figure 6. This situation persists as long as the tape portion beyond the cutting line has a length equal to a desired length of the stir sticks 3 stored in the electronic control and command unit 22.

When the desired length is reached, the rotation direction of the motor 20 is reversed by the electronic control and command unit 22. Due to what has been said above, in this condition, the joint 41 snaps as the relevant wheel 35 is blocked by the foil 38, thus keeping the feeding wheel 29 stationary for as long as the cam during rotation moves the arms 66 from the retracted rest position (Figure 5) to the feeding position (Figure 6) for cutting the tape 9 and separating the stir sticks 3.

From the above it may be appreciated that the tape forming assembly 10 is easily controllable since the control of the tape feeding and cutting assemblies depends only on the control of a single motor and, in particular, only on the rotation direction of the same.

Operation of the tape forming assembly 10 is hence made correct, precise, and time invariant by the provision of a paper presence sensor S1, shown in Figure 2C, an encoder-type tape feeding sensor S2 shown in Figure 7, and a cutting blade position sensor S3, partially shown in Figure 7, arranged to sense the angular position of the arms 66 around the axis 68.

As the tape feeding and cutting steps depend only on the rotation direction of the motor and on the time during which the motor 20 rotates in one rotation direction or the other, the tape feeding and cutting assemblies are always perfectly mutually synchronized, so resulting in the stir sticks having always the same desired length and, above all, a high and constant quality.

In addition, the tape forming assembly 10 is extremely compact compared with known solutions.

The foregoing results not only from the provision of a single motor shared by the tape feeding and cutting assemblies, but also from the particular arrangement of the various motion transmission members. Specifically, as may be appreciated in Figure 3, the tape forming assembly 10, the mechanical transmission 23, the two shafts 25 and 27, the one-way angular motion transmission assemblies 33,61, the two cam lobes 75, the two gear wheels 32 and 60, and the two arms 66 are arranged symmetrically on opposite sides of a vertical laying plane P where a rotation axis 21A of an output shaft of the electric motor 20 lays and passing through the tape feeding wheel 29.

In addition, the use of pairs of identical gear wheels, as well as of the identical arms 66 results in the tape forming assembly 10 being cheap and easy to assemble, also thanks to the particular structure of the shaft 30.

From the foregoing it may appreciated that several modifications may be made to the above-described tape forming assembly 10 without departing from the scope of protection defined by the appended claims.

In particular, the mechanical transmission 23 for transmitting the torque delivered by the motor 20 to the two branches A and B may be different from the one described above, just as the tape feeding assembly 16 and the tape cutting assembly 16 may be constructively different from the one described above. In particular, the tape cutting assembly 19 may comprise a different drive cam and/or a single arm 66 for moving the cutting blade 55 shaped in the same way as or different from that exemplarily described.

## Claims

1. A stir stick forming assembly (10), in particular for a stir stick dispenser (2) of a beverage vending machine (1); the stir stick forming assembly (10) comprises a mounting frame (15) to allow the stir stick forming assembly (10) to be mounted to a fixed body (6); an inlet passage (11) for a tape (9), an outlet opening (12) for the stir sticks (3), a tape feeding member (29) to feed the tape (9) to the outlet opening (12); first motorized means (20,24,25,26,32,33) to drive the tape feeding member (29); a tape cutting member (55) to transversally cut the tape (9) to form the stir sticks (3); and second motorized means (20, 24, 25, 27, 60, 61, 65) to drive the tape cutting member (55); the first and second motorized driving means comprise a single common electric motor (20); command and control means (22) are provided to cause the electric motor (20) to rotate in one rotation direction to operate the tape feeding member (29) and in the opposite rotation direction to operate the tape cutting member (5); **characterized in that** the first motorized means (20, 24, 25, 26, 32, 33) and the second motorized means (20, 24, 25, 27, 60, 61, 65) are arranged symmetrically on opposite sides of a vertical laying plane (P) where an axis (21A) of a rotating shaft (21) of the electric motor (20) lays; and by further comprising a mechanical transmission (23) to direct a torque delivered by the electric motor (20) along two parallel branches (A, B) and, for each branch (A, B), to a respective support shaft (26, 27) and comprising, for each support shaft (26; 27), a respective motion inlet bevel gear (25) idly rotatably mounted on the respective support shaft; a first one (26) of the support shafts is part of the first motorized means (20,24,25,26,32,33) and a second one (27) of the support shafts is part of the second motorized means (20, 24, 25, 27, 60, 61, 65); the first and second motorized means further comprise, respectively, first and second one-way angular motion transmission assemblies (33, 61) supported, respectively, by the first support shaft (26) and by the second support shaft (27) and configured to drive the tape feeding member (29) when the electric motor (20) is operated to rotate in one rotation direction and to drive the tape cutting member (55) when the electric motor (20) is operated to rotate in the opposite rotation direction.

2. The stir stick forming assembly (10) of claim 1**,** wherein each one-way angular motion transmission assembly (33; 61) comprises a respective first gear wheel (35; 35') idly rotatably mounted on the relevant support shaft (26; 27), a respective ratchet gear (36; 36') arranged between the mounting frame (15) and the relevant first gear wheel (35; 35') to allow the first gear wheel (35; 35') to freely rotate in one rotation direction and to cause the first gear wheel (35; 35') to be angularly integral with the mounting frame (15) in the opposite rotation direction, and a respective compliant angular joint (40; 40') arranged between the relevant inlet bevel gear (25) and the relevant first gear wheel (35; 35').

3. The stir stick forming assembly (10) of claim **2,** wherein each compliant angular joint (40; 40') is a snap-fit compliant angular joint.

4. The stir stick forming assembly (10) of claim **3,** wherein each compliant angular joint (40; 40') comprises a respective transmission member (41; 41') mounted to slide along the relevant support shaft (26; 27); the transmission member (41; 41') is coupled to the relevant bevel gear (25) so as to be angularly fixed and axially slidable along the relevant support shaft (26; 27) and comprise a plurality of front teeth (44; 44'); each compliant angular joint (40; 40') further comprises a plurality of angular retention axial seats (47; 47') carried by the relevant first gear wheel (35; 35') to be axially engaged by the front teeth (44; 44'); elastic means (48; 48') to push the relevant front teeth (44; 44') towards the relevant angular retention axial seats (47; 47'); and cam means (50; 50') arranged between the relevant front teeth (44; 44') and the first gear wheel (35; 35') to exert, on the relevant front teeth (44; 44'), an axial thrust opposite to that of the relevant elastic means (48; 48') to disengage the relevant front teeth (44; 44') from the relevant angular retention axial seats (47; 47').

5. The stir stick forming assembly (10) of any one of the preceding claims, wherein the mechanical transmission (23) comprises a bevel pinion (24) fitted to an output shaft of the electric motor (20) and meshing with both the bevel gears (25).

6. The stir stick forming assembly (10) of claim **5,** wherein the bevel gears (25) are arranged on diametrically opposite sides of the bevel pinion (24) and are idly rotatably mounted on the relevant support shafts (26; 27) to idly rotate about a first fixed common axis (28) orthogonal to an axis (21A) of the bevel pinion (24); the support shafts (26; 27) are parts of a one-piece support shaft.

7. The stir stick forming assembly (10) of any one of claims **2** to **4,** wherein the first motorized means (20, 24, 25, 26, 32, 33) comprise one of the first gear wheels (35) and a second gear wheel (32) rotatably mounted to rotate about a second fixed axis (31) and meshing with the first gear wheel (35); the tape feeding member (29) comprises an externally toothed disc (29) arranged coaxially to the second fixed axis (31) and stably connected to the second gear wheel (32).

8. The stir stick forming assembly (10) of any one of claims **2** to **4,** wherein the second motorized means (20, 24, 25, 27, 60, 61, 65) comprise cam driving means (65).

9. The stir stick forming assembly (10) of claim **8,** wherein the second motorized means (20, 24, 25, 27, 60, 61, 65) comprise one said first gear wheel (35') and a third gear wheel (60) rotatably mounted to rotate about a second fixed axis (31) and meshing with said first gear wheel (35'); said cam driving means (65) are driven by the third gear wheel (60).

10. The stir stick forming assembly (10) of claim **9,** wherein the cam driving means (65) comprise an eccentric cam (73) rotatably mounted to rotate about the second fixed axis (31) and angularly integral with the third gear wheel (60), and at least one arm (66) arranged in contact with the cam (73) to the tape cutting member (55).

11. The stir stick forming assembly (10) of claim **10,** wherein the arm (66) is a pendulum arm and comprises an end portion (67) hinged to the mounting frame (15), an opposite end portion (70) carrying the tape cutting member (55), and an intermediate portion cooperating with the cam (73); the cam (73) comprises at least one radial lobe (75), and elastic means (76) are provided to keep the intermediate portion of the arm (66) in contact with the radial lobe (75).

12. The stir stick forming assembly (10) of claim **11,** wherein the cam driving means (65) comprise two of said radial lobes (75) rotatably mounted to rotate about the second fixed axis (31) and mutually spaced apart along the second fixed axis (31) and angularly integral with the third gear wheel (60) and, for each radial lobe (75), a respective arm (66) is arranged in abutment against the relevant radial lobe (75).

13. The stir stick forming assembly (10) of any one the preceding claims, wherein the tape feeding member (29) is formed by a disc body rotatable about a fixed axis (31) and intersected by a prolongation of an axis (21A) of a rotating shaft (21) of the electric motor (20).

## Patentansprüche

1. Eine Formungsvorrichtung (10) für Rührstäbchen, insbesondere für einen Rührstäbchen-Spender (2) eines Getränkeautomaten (1);
wobei die Formungsvorrichtung (10) für Rührstäbchen Folgendes aufweist:
einen Montagerahmen (15), um die Montage der Formungsvorrichtung (10) für Rührstäbchen an einem feststehenden Körper (6) zu ermöglichen;
einen Einlasskanal (11) für ein Band (9), eine Auslassöffnung (12) für die Rührstäbchen (3), ein Bandzuführungselement (29), um das Band (9) zur Auslassöffnung (12) zu führen;
erste motorisierte Mittel (20, 24, 25, 26, 32, 33), um das Bandzuführungselement (29) anzutreiben;
ein Bandschneidelement (55), um das Band (9) quer zu schneiden und die Rührstäbchen (3) zu formen; und
zweite motorisierte Mittel (20, 24, 25, 27, 60, 61, 65) um das Bandschneidelement (55) anzutreiben;
wobei die ersten und die zweiten motorisierten Antriebsmittel einen einzigen gemeinsamen Elektromotor (20) aufweisen;
wobei eine Befehls- und Steuereinrichtung (22) vorgesehen ist, um den Elektromotor (20) in einer Drehrichtung rotieren zu lassen, um das Bandzuführelement (29) zu betätigen, und in der entgegengesetzten Drehrichtung, um das Bandschneidelement (5) zu betätigen;
**dadurch gekennzeichnet, dass** die ersten motorisierten Mittel (20, 24, 25 , 26, 32, 33) und die zweiten motorisierten Mittel (20, 24, 25, 27, 60, 61, 65) symmetrisch auf gegenüberliegenden Seiten einer vertikalen Ebene (P) angeordnet sind, in der eine Achse (21A) einer rotierenden Welle (21) des Elektromotors (20) liegt; und dass sie ferner ein mechanisches Getriebe (23) aufweisen, um ein vom Elektromotor (20) geliefertes Drehmoment entlang zweier paralleler Zweige (A, B) und, für jeden Zweig (A, B), zu einer jeweiligen Stützwelle (26, 27) zu leiten, und aufweisend, für jede Stützwelle (26; 27), ein jeweiliges Bewegungseinlass-Kegelrad (25), das drehbar auf der jeweiligen Stützwelle angebracht ist;
eine erste (26) der Stützwellen Teil der ersten motorisierten Mittel (20, 24, 25, 26, 32, 33) ist und dass eine zweite (27) der Stützwellen Teil der zweiten motorisierten Mittel (20, 24, 25, 27, 60, 61, 65) ist;
die ersten und zweiten motorisierten Mittel ferner jeweils erste und zweite Einweg-Winkelbewegungsübertragungsbaugruppen (33, 61) aufweisen, die jeweils von der ersten Stützwelle (26) und von der zweiten Stützwelle (27) getragen werden und die so konfiguriert sind, dass sie das Bandzuführungselement (29) antreiben, wenn der Elektromotor (20) so betrieben wird, dass er sich in einer Drehrichtung dreht, und das Bandschneidelement (55) antreiben, wenn der Elektromotor (20) so betrieben wird, dass er sich in der entgegengesetzten Drehrichtung dreht.

2. Die Formungsvorrichtung (10) für Rührstäbchen nach Anspruch 1, wobei jede Einweg-Winkelbewegungsübertragungsbaugruppe (33; 61) Folgendes aufweist:
ein jeweiliges erstes Zahnrad (35; 35'), das frei drehbar auf der entsprechenden Stützwelle (26; 27) angebracht ist, ein jeweiliges Sperrzahnrad (36; 36'), das zwischen dem Montagerahmen (15) und dem entsprechenden ersten Zahnrad (35; 35') angeordnet ist, um zu ermöglichen, dass sich das erste Zahnrad (35; 35') in einer Drehrichtung frei dreht, und um zu bewirken, dass das erste Zahnrad (35; 35') in der entgegengesetzten Drehrichtung winklig integral mit dem Montagerahmen (15) ist, und ein jeweiliges nachgiebiges Winkelgelenk (40; 40'), das zwischen dem jeweiligen Bewegungseinlass-Kegelrad (25) und dem jeweiligen ersten Zahnrad (35; 35') angeordnet ist.

3. Die Formungsvorrichtung (10) für Rührstäbchen nach Anspruch 2, wobei jedes nachgiebige Winkelgelenk (40; 40') ein nachgiebiges Schnapp-Winkelgelenk ist.

4. Die Formungsvorrichtung (10) für Rührstäbchen nach Anspruch 3, wobei jedes nachgiebige Winkelgelenk (40; 40') ein jeweiliges Übertragungselement (41; 41') aufweist, das so angebracht ist, dass es entlang der entsprechenden Stützwelle (26; 27) gleitet; wobei das Übertragungselement (41; 41') mit dem entsprechenden Kegelrad (25) gekoppelt ist, so dass es winklig fixiert und axial entlang der entsprechenden Stützwelle (26; 27) verschiebbar ist und eine Vielzahl von Frontzähnen (44; 44') aufweist;
wobei jedes nachgiebige Winkelgelenk (40; 40') ferner eine Vielzahl von axialen Winkelsicherungssitzen (47; 47') aufweist, die von dem entsprechenden ersten Zahnrad (35; 35') getragen werden, um axial mit den Frontzähnen (44; 44') in Eingriff zu kommen;
elastische Mittel (48; 48'), um die entsprechenden Frontzähne (44; 44') in Richtung der entsprechenden axialen Winkelsicherungssitze (47; 47') zu drücken; und
Nockenmittel (50; 50'), die zwischen den entsprechenden Frontzähnen (44; 44') und dem ersten Zahnrad (35; 35') angeordnet sind, um auf die entsprechenden Vorderzähne (44; 44') einen axialen Schub auszuüben, der dem der entsprechenden elastischen Mittel (48; 48') entgegengesetzt ist, um die entsprechenden Vorderzähne (44; 44') von den entsprechenden axialen Winkelsicherungssitzen (47; 47') zu lösen.

5. Die Formungsvorrichtung (10) für Rührstäbchen nach einem der vorhergehenden Ansprüche, wobei das mechanische Getriebe (23) ein Kegelritzel (24) aufweist, das an einer Abtriebswelle des Elektromotors (20) angebracht ist und mit beiden Kegelrädern (25) kämmt.

6. Die Formungsvorrichtung (10) für Rührstäbchen nach Anspruch 5, wobei die Kegelräder (25) auf diametral gegenüberliegenden Seiten des Kegelritzels (24) angeordnet sind und auf den entsprechenden Stützwellen (26; 27) drehbar gelagert sind, um sich frei um eine erste feste gemeinsame Achse (28) orthogonal zu einer Achse (21A) des Kegelritzels (24) zu drehen;
wobei die Stützwellen (26; 27) Teile einer einteiligen Stützwelle sind.

7. Die Formungsvorrichtung (10) für Rührstäbchen nach einem der Ansprüche 2 bis 4, wobei die ersten motorisierten Mittel (20, 24, 25, 26, 32, 33) eines der ersten Zahnräder (35) und ein zweites Zahnrad (32) aufweisen, das drehbar um eine zweite feste Achse (31) montiert ist und mit dem ersten Zahnrad (35) kämmt;
wobei das Bandzuführungselement (29) eine außen verzahnte Scheibe (29) aufweist, die koaxial zur zweiten festen Achse (31) angeordnet und die stabil mit dem zweiten Zahnrad (32) verbunden ist.

8. Die Formungsvorrichtung (10) für Rührstäbchen nach einem der Ansprüche 2 bis 4, wobei die zweiten motorisierten Mittel (20, 24, 25, 27, 60, 61, 65) eine Nockenantriebseinrichtung (65) aufweisen.

9. Die Formungsvorrichtung (10) für Rührstäbchen nach Anspruch 8, wobei die zweiten motorisierten Mittel (20, 24, 25, 27, 60, 61, 65) ein erstes Zahnrad (35') und ein drittes Zahnrad (60) aufweisen, das drehbar um eine zweite feste Achse (31) montiert ist und mit dem ersten Zahnrad (35') kämmt;
wobei die Nockenantriebseinrichtung (65) durch das dritte Zahnrad (60) angetrieben wird.

10. Die Formungsvorrichtung (10) für Rührstäbchen nach Anspruch 9, wobei die Nockenantriebseinrichtung (65) einen Exzenternocken (73), der drehbar um die zweite feste Achse (31) montiert ist und der winklig mit dem dritten Zahnrad (60) integriert ist, und mindestens einen Arm (66) aufweist, der in Kontakt mit dem Nocken (73) zum Bandschneidelement (55) angeordnet ist.

11. Die Formungsvorrichtung (10) für Rührstäbchen nach Anspruch 10, wobei der Arm (66) ein Pendelarm ist und einen Endabschnitt (67), der an dem Montagerahmen (15) angelenkt ist, einen gegenüberliegenden Endabschnitt (70), der das Bandschneidelement (5 5) trägt, und einen Zwischenabschnitt, der mit dem Nocken (73) zusammenwirkt aufweist; wobei der Nocken (73) mindestens einen radialen Vorsprung (75) aufweist, und wobei elastische Mittel (76) vorgesehen sind, um den Zwischenabschnitt des Arms (66) in Kontakt mit dem radialen Vorsprung (75) zu halten.

12. Die Formungsvorrichtung (10) für Rührstäbchen nach Anspruch 11, wobei die Nockenantriebsmittel (65) zwei der radialen Vorsprünge (75) aufweisen, die drehbar um die zweite feste Achse (31) montiert sind und die entlang der zweiten festen Achse (31) voneinander beabstandet sind und die winklig mit dem dritten Zahnrad (60) integriert sind, und wobei für jede radiale Nocke (75) ein entsprechender Arm (66) in Anlage an der relevanten radialen Nocke (75) angeordnet ist.

13. Die Formungsvorrichtung (10) für Rührstäbchen nach einem der vorstehenden Ansprüche, wobei das Bandzuführungselement (29) durch einen Scheibenkörper gebildet wird, der um eine feste Achse (31) drehbar ist und der von einer Verlängerung einer Achse (21A) einer rotierenden Welle (21) des Elektromotors (20) geschnitten wird.

## Revendications

1. Ensemble de formation de bâtonnets mélangeurs (10), en particulier pour un distributeur de bâtonnets mélangeurs (2) d'un distributeur de boissons automatique (1) ; l'ensemble de formation de bâtonnets mélangeurs (10) comprend un châssis de montage (15) pour permettre à l'ensemble de formation de bâtonnets mélangeurs (10) d'être monté sur un corps fixe (6) ; un passage d'entrée (11) pour une bande (9), une ouverture de sortie (12) pour les bâtonnets mélangeurs (3), un élément d'alimentation de bande (29) pour alimenter la bande (9) à l'ouverture de sortie (12) ; des premiers moyens motorisés (20, 24, 25, 26, 32, 33) pour entraîner l'élément d'alimentation de bande (29) ; un élément de coupe de bande (55) pour couper transversalement la bande (9) afin de former les bâtonnets mélangeurs (3) ;
et des seconds moyens motorisés (20, 24, 25, 27, 60, 61, 65) pour entraîner l'élément de coupe de bande (55) ; les premiers et seconds moyens d'entraînement comprennent un seul moteur électrique commun (20) ; des moyens de commande et de contrôle (22) sont prévus pour amener le moteur électrique (20) à tourner dans une direction de rotation afin d'actionner l'élément d'alimentation de bande (29) et dans la direction de rotation opposée afin d'actionner l'élément de coupe de bande (5) ;
**caractérisé en ce que** les premiers moyens motorisés (20, 24, 25, 26, 32, 33) et les seconds moyens motorisés (20, 24, 25, 27, 60, 61, 65) sont agencés de manière symétrique sur les côtés opposés d'un plan de pose vertical (P) où un axe (21A) d'un arbre rotatif (21) du moteur électrique (20) se trouve ; et **en ce qu'**il comprend en outre une transmission mécanique (23) pour diriger un couple fourni par le moteur électrique (20) le long de deux branches (A, B) parallèles et pour chaque branche (A, B), vers un arbre de support (26, 27) respectif, et comprenant, pour chaque arbre de support (26 ; 27), un engrenage conique d'entrée de mouvement (25) respectif monté de manière rotative folle sur l'arbre de support ; un premier (26) des arbres de support fait partie des premiers moyens motorisés (20, 24, 25, 26, 32, 33) et un second (27) des arbres de support fait partie des seconds moyens motorisés (20, 24, 25, 27, 60, 61, 65) ; les premiers et seconds moyens motorisés comprennent en outre, respectivement des premier et second ensembles de transmission de mouvement angulaire à une voie (33, 61) supportés, respectivement, par le premier arbre de support (26) et par le second arbre de support (27) et configurés pour entraîner l'élément d'alimentation de bande (29) lorsque le moteur électrique (20) est actionné pour tourner dans une direction de rotation et pour entraîner l'élément de coupe de bande (55) lorsque le moteur électrique (20) est actionné pour tourner dans la direction de rotation opposée.

2. Ensemble de formation de bâtonnets mélangeurs (10) selon la revendication 1, dans lequel l'ensemble de transmission de mouvement angulaire à une voie (33 ; 61) comprend un première roue dentée (35 ; 35') respective montée de manière rotative folle sur l'arbre de support (26 ; 27) correspondant, un encliquetage à rochet (36 ; 36') respectif agencé entre le châssis de montage (15) et la première roue dentée (35 ; 35') correspondante pour permettre à la première roue dentée (35 ; 35') de tourner librement dans une direction de rotation et pour amener la première roue dentée (35 ; 35') à être solidaire, de manière angulaire avec le châssis de montage (15) dans la direction de rotation opposée, et un joint angulaire souple (40 ; 40') respectif agencé entre l'engrenage conique d'entrée (25) correspondant et la première roue dentée (35 ; 35') correspondante.

3. Ensemble de formation de bâtonnets mélangeurs (10) selon la revendication 2, dans lequel chaque joint angulaire souple (40 ; 40') est un joint angulaire souple à encliquetage.

4. Ensemble de formation de bâtonnets mélangeurs (10) selon la revendication 3, dans lequel chaque joint angulaire souple (40 ; 40') comprend un élément de transmission (41 ; 41') respectif monté pour coulisser le long de l'arbre de support (26 ; 27) correspondant ; l'élément de transmission (41 ; 41') est couplé à l'engrenage conique (25) correspondant afin d'être angulairement fixe et axialement coulissant le long de l'arbre de support (26 ; 27) correspondant et comprend une pluralité de dents avant (44 ; 44') ; chaque joint angulaire souple (40 ; 40') comprend en outre une pluralité de sièges axiaux de retenue angulaire (47 ; 47') portés par la première roue dentée (35 ; 35') correspondante pour être axialement mis en prise par les dents avant (44 ; 44') ; des moyens élastiques (48 ; 48') pour pousser les dents avant (44 ; 44') correspondantes vers les sièges axiaux de retenue angulaire (47 ; 47') correspondants ; et des moyens de came (50 ; 50') agencés entre les dents avant (44 ; 44') correspondantes et la première roue dentée (35 ; 35') pour exercer, sur les dents avant (44 ; 44') correspondantes, une poussée axiale opposée à celle des moyens élastiques (48 ; 48') correspondants afin de dégager les dents avant (44 ; 44') correspondantes des sièges axiaux de retenue angulaire (47 ; 47').

5. Ensemble de formation de bâtonnets mélangeurs (10) selon l'une quelconque des revendications précédentes, dans lequel la transmission mécanique (23) comprend un pignon conique (24) monté sur un arbre de sortie du moteur électrique (20) et s'engrenant avec les deux engrenages coniques (25).

6. Ensemble de formation de bâtonnets mélangeurs (10) selon la revendication 5, dans lequel les engrenages coniques (25) sont mis en prise sur les côtés diamétralement opposés du pignon conique (24) et sont montés de manière rotative folle sur les arbres de support (26 ; 27) correspondants pour tourner, de manière folle, autour d'un premier axe fixe commun (28) orthogonal à un axe (21A) du pignon conique (24) ; les arbres de support (26 ; 27) font partie d'un arbre de support d'un seul tenant.

7. Ensemble de formation de bâtonnets mélangeurs (10) selon l'une quelconque des revendications 2 à 4, dans lequel les premiers moyens motorisés (20, 24, 25, 26, 32, 33) comprennent l'une des premières roues dentées (35) et une deuxième roue dentée (32) montée de manière rotative pour tourner autour d'un second axe fixe (31) et s'engrenant avec la première roue dentée (35) ; l'élément d'alimentation de bande (29) comprend un disque (29) extérieurement denté agencé de manière coaxiale sur le second axe fixe (31) et raccordé de manière stable à la deuxième roue dentée (32).

8. Ensemble de formation de bâtonnets mélangeurs (10) selon l'une quelconque des revendications 2 à 4, dans lequel les seconds moyens motorisés (20, 24, 25, 27, 60, 61, 65) comprennent des moyens d'entraînement à came (65).

9. Ensemble de formation de bâtonnets mélangeurs (10) selon la revendication 8, dans lequel les seconds moyens motorisés (20, 24, 25, 27, 60, 61, 65) comprennent une dite première roue dentée (35') et une troisième roue dentée (60) montée de manière rotative pour tourner autour d'un second axe fixe (31) et s'engrenant avec ladite première roue dentée (35') ; lesdits moyens d'entraînement à came (65) sont entraînés par la troisième roue dentée (60).

10. Ensemble de formation de bâtonnets mélangeurs (10) selon la revendication 9, dans lequel les moyens d'entraînement à came (65) comprennent une came excentrique (73) montée de manière rotative pour tourner autour du second axe fixe (31) et solidaire, de manière angulaire, avec la troisième roue dentée (60) et au moins un bras (66) agencé en contact avec la came (73) sur l'élément de coupe de bande (55).

11. Ensemble de formation de bâtonnets mélangeurs (10) selon la revendication 10, dans lequel le bras (66) est un bras pendulaire et comprend une partie d'extrémité (67) articulée sur le châssis de montage (15), une partie d'extrémité (70) opposée portant l'élément de coupe de bande (55) et une partie intermédiaire coopérant avec la came (73) ; la came (73) comprend au moins un lobe radial (75) et des moyens élastiques (76) sont prévus pour maintenir la partie intermédiaire du bras (66) en contact avec le lobe radial (75).

12. Ensemble de formation de bâtonnets mélangeurs (10) selon la revendication 11, dans lequel les moyens d'entraînement à came (65) comprennent deux desdits lobes radiaux (75) montés de manière rotative pour tourner autour du second axe fixe (31) et mutuellement espacés le long du second axe fixe (31) et solidaire, de manière angulaire, avec la troisième roue dentée (60) et pour chaque lobe radial (75), un bras (66) respectif est agencé en butée contre le lobe radial (75) correspondant.

13. Ensemble de formation de bâtonnets mélangeurs (10) selon l'une quelconque des revendications précédentes, dans lequel l'élément d'alimentation de bande (29) est formé par un corps de disque pouvant tourner autour d'un axe fixe (31) et coupé par un prolongement d'un axe (21A) d'un arbre rotatif (21) du moteur électrique (20).
